# EUROPEAN PATENT APPLICATION

(11) **EP 2 746 992 A1**
(43) Date of publication of application: **25.06.2014**
(21) Application number: 12198726.7
(22) Date of filing: 20.12.2012
(51) Int. Cl.: G06K 17/00

(54) **Method and apparatus for providing printed and encoded RFID tags**

(71) Applicant: Barink, Bernard, Port Charlotte, FL 33981 (US)
(72) Inventor: Barink, Bernard, Port Charlotte, FL 33981 (US)
(74) Representative: Winter, Brandl, Fürniss, Hübner, Röss, Kaiser, Polte - Partnerschaft

(57) **Abstract**

The present invention provides a method and module for providing one or more tags such as e.g. inlays, labels or tickets, comprising encoding such as a bulk encoding of the one or more tags, and printing a code such as a barcode onto the tag. At least one code such as a UPC, universal product code may be received from a source such as a manufacturer, and tags such as inlays, labels, tickets or wafers such as RFID, radio frequency identification, wafers with unique tag identity are provided. The one or more tags are fed into a serialization module, and the code is printed onto the tags wherein after, before or during the code printing such as UPC printing, a serialization module writes the preconfigured data such as EPC data to multiple tags such as labels/tickets simultaneously so as to carry out a bulk encoding.

## Description

Generally, it is known to provide separate machines for encoding and for printing of bar codes of transponders.

The present invention mainly, but not exclusively, relates to coding (personalizing) of items such as electronic labels, tags, chips, or the like.

WO 2007/078331 A1 discloses systems and methods for validating RFID, radio frequency identity, tag data prior to writing such data into an RFID tag.

The present invention provides an apparatus or method for generating coded tags, labels, chips or the like with high efficiency and throughput.

Generally, during a personalizing process, one or more numbers such as electronic product code, EPC, numbers are generated based on specific data such as chip UID, unique identification number, or TID, tag identification number, plus a UPC, universal product code. A chip UID may be fixedly programmed into a chip.

All codes such as the EPC codes and numbers may, and usually will, be stored in a data base. Both numbers UPC and generated EPC codes (number code) may then be stored e.g. in a tag or printed onto a transponder label. Preferably, this storing or printing is effected with a high throughput of e.g. 30.000 to 60.000 units per hour, UPH. The universal product code, UPC, may e.g. have the form of a bar code. A bulk encoding system may be used for reading or coding, i.e. printing or storing, UIDs of e.g. 1.500 transponders per minute.

One or more embodiments of the invention provide a module which is capable of integration and which can be integrated into a production line or system, e.g. immediately after converting of transponder labels or tags. In the present disclosure, the term "tag" is to be understood as comprising, and as reference to, any code receiving item or code carrying item such as e.g. tags, inlays, labels, tickets or chips. In a similar manner, any of these terms "inlays, labels, tickets or chips" is to be understood as comprising, and as reference to, any other type of code receiving item or code carrying item such as e.g. tags.

Bulk encoding may be used, e.g. in the form of a bulk encoding software or a bulk encoding software system.

In accordance with an aspect, a method for providing one or more items such as tags, including e.g. inlays, labels or tickets or chips, comprises providing or accessing a database such as a centralized code database or an EPC, electronic product code, database. The method comprises encoding, such as a bulk encoding, the one or more items such as tags, and printing a code such as a barcode onto the tag.

The method may comprise at least one or more, in any arbitrary combination, or all of the following steps in any arbitrary sequence:
- Receive at least one code such as a UPC, universal product code from a source such as a manufacturer,
- Receive tags such as inlays, labels, tickets or wafers such as RFID, radio frequency identification, wafers with unique tag identity,
- Generate a code such as an EPC code,
- Provide a database comprising codes such as EPC codes and corresponding UPC codes,
- Feeding one or more tags such as inlays, labels and tickets, into a serialization module, e.g. in-line,
- Printing the code such as an UPC code or barcode optionally together with an EPC logo,
- Printing the code such as UPC code onto the tag, such as a barcode, for multiple tags, for example by setting a production database to a number of required tags having the same code such as UPC code,
- After or before or during the code printing such as UPC printing, a serialization module writes to multiple tags such as labels/tickets simultaneously so as to carry out a bulk encoding, the preconfigured data such as EPC data supplied from the database,
- Optionally driving multiple antennas by multi-port readers or other multiplexing techniques to be sequences across the serialization module,
- Printing the code such as an EPC code after bulk encoding,
- Reading the pre-encoded data such as EPC data from the prior bulk encoding step, for each individual tag, and printing variable data such as EPC data onto the tag,
- Optionally verifying that the EPC code or other code printed or provided is matching the printed code such as UPC code or barcode, optionally by scanning such as laser scanning;
- Optionally discarding non-matching tags and the products carrying such tags,
- Optionally transmitting EPC data securely to a site as required by a customer, or to a central customer network.

In accordance with another aspect, a serialization module is provided which comprises, or is configured for access to, a database such as a centralized code database or an EPC, electronic product code, database; an encoding means for encoding such as a bulk encoding of one or more item such as tags; and printing means for printing a code such as a barcode onto the item.

The serialization module may comprise at least one, more, in any arbitrary combination, or all of the following features:
- Means for receiving codes such as UPC, universal product code from a source such as a manufacturer,
- Means for receiving tags such as inlays, labels, tickets or wafers such as RFID, radio frequency identification, wafers with unique identity such as tag identity,
- Means for generating a code such as an EPC code,
- Means for providing, or accessing, a database comprising codes such as EPC codes and corresponding UPC codes,
- Means for feeding one or more tags such as inlays, labels and tickets, into a serialization module, e.g. in-line,
- Means for printing a code such as an UPC code or barcode, and optionally also an EPC logo,
- Means for printing the code such as UPC code or a barcode, onto one or multiple tags, for example by setting the production database to a number of required tags having the same code such as UPC code,
- Means for writing, before or after code printing such as UPC printing, to multiple tags such as labels/tickets simultaneously so as to carry out a bulk encoding, wherein preconfigured data such as EPC data can be supplied from the database,
- Means for optionally driving multiple antennas by multi-port readers or other multiplexing techniques to be sequences across the serialization module,
- Means for printing a code such as an EPC code after bulk encoding,
- Means for optionally reading the pre-encoded data such as EPC data from the prior bulk encoding step, for each individual tag, and printing variable data such as EPC data onto the tag,
- Means for optionally verifying that the EPC code or other code printed or provided is matching the printed code such as UPC code or barcode, optionally by scanning such as laser scanning;
- Means for optionally discarding non-matching tags and the products carrying such tags,
- Means for optionally transmitting EPC data securely to a site as required by a customer, or to a central customer network.

In accordance with another aspect, a system is provided which comprises at least one serialization module. The system may additionally comprise at least one of a tag supplying device such as a supply roll, and a tag receiving device such as a take-up roll.

Further, electronic product codes, EPC, may already be generated in advance so that only the data will have to be printed thereafter, increasing the total speed and throughput.

In the following, embodiments of the invention will be described with reference to the drawings.
Fig. 1 illustrates an embodiment of a standalone serialization module;
Fig. 2 illustrates another embodiment of a serialization module; and
Fig. 3 shows different types of arrangements of tags or label which may be positioned as shown in partial drawings (A), (B), and (C).

Below, implementations of the invention will be described.

Embodiments of the invention may be implemented for example as an integrated serialization module, ISM, a standalone serialization module, SSM, or in any other form.

Regarding the machine concept, an integrated serialization module may e.g. be used for in-line printing and encoding systems that plug into any existing converting line with a buffer to connect to conventional machines.

In another example, a standalone serialization module may be used for ultralow cost, offline printing and/or encoding systems that may e.g. be added as a standalone unit after a converting process.

Embodiments of the invention may provide a unique process flow wherein a centralized EPC, electronic product code, database may be established prior to, or at any point of, manufacturing e.g. RFID inlay/label/ticket.

In this or another embodiment, a bulk encoding may be implemented in the ISM or SSM process as part of the manufacturing process flow of manufacturing inlays such as RFID inlays, labels, and/or tickets, or the like.

In these or other embodiments, a shield-less continuous RFID encoding system is implemented in the ISM or SSM module which allows continuous flow from prior or conventional converting process, in contrast to e.g. offline systems.

Further, in these or other embodiments, the ISM/SSM process may decouple the UPC, universal product code, printing from EPC encoding to enable very fast speeds with UPC pre-printing (or using incoming pre-printed UPC tickets), followed by EPC encoding in bulk, to achieve a high overall throughput of e.g. up to 60.000 units per hour, UPH, or more.

The serialization module such as ISM or SSM, enables, or may even guarantee, unique EPC, that correlates 1:1 with UPC, through utilization of e.g. chip serialization, TID, i.e. tag identity, or other mechanisms to assure unique serialization.

The described serialization module process such as ISM process or SSM process, may be used for any identity ID, or "tag" serialization requirement, such as for inlay, label, ticket or ID cards, and also for those not requiring EPC encoding for e.g. border crossing application or other that need just unique serialization, as the tag can be programmed uniquely e.g. in RF, radio frequency, field, and may be matched to the barcode, or magnetic stripe, for correlation.

Embodiments of the invention therefore relate to EPC serialization, to source tagging EPC, and/or to RFID source tagging, etc. Further, these or other embodiments provide EPC encoding and printing. Further, these or other embodiments may provide EPC writing, RFID printing and/or encoding. These or other embodiments may further be used for, or provide, serialization commissioning, and/or unique serial number generation RFID.

Conventional chip manufacturers may be used as well as RFID printer/encoder manufacturers, or conventional machine builders, service bureau/source tagging/software architecture providers. Embodiments may be implemented using existing standards such as same of EPCglobal, GS1, AIM.

In the following, a basic ISM concept is described. Tag such as inlay, label or ticket manufacturing processes for UHF technology may take specific steps to insure writing to 1 tag at 1 time, including shielding, antenna configuration etc. Encoding is done after printing, and on an individual tag basis. Once the labels or tickets are manufactured, these labels/tickets are sent into offline system for printing and encoding, and then may either be shipped to various facilities around the globe for source tagging where print shops use RFID printers/encoders feeding in the raw stock of labels/tickets and printing (UPC), encoding (EPC) and managing the data either decentralized, e.g. in printshops, or centralized, e.g. at the location of a manufacturer such as e.g. a jeans maker. If the decentralized approach is used, IT infrastructure may be managed by a service bureau. Alternatively, the manufactured labels/tickets may be encoded/printed at a label/ticket manufacturer using an offline system or the like.

In the systems described above, the following flow for encoding one tag at a time may be used which includes the steps of reading the TID of the chip, write, to the chip, the EPC data of e.g. 96 bits, and verify that write operation is successful. Printer companies as well as offline test/encode system have to assure that one-tag-at-a-time encoding is met so that the information is written to the correct tag and not an adjacent tag.

The serialization module approach, i.e. ISM/SSM approach used in one or more embodiments of the invention comprises a first step or stage (input) wherein UPC codes are received from a manufacturer, e.g. the jeans manufacturer mentioned above. Further, in this input step or stage, RFID wafers will be received with unique TID such as UID, unique identification number, or tag identification number TID.

In a next step or stage, a unique serialization is effected wherein an EPC code = UPC + unique serial number (which is generated using the unique TID with various techniques) is generated.

Further, as a third step or stage, a database for unique serialization is provided. EPC codes and corresponding UPC code database is, in embodiments of the invention, available prior to production of tags such as labels and tickets so as to enable just in time production flow for tags/labels/tickets printing and encoding. The database may be designed to enable traceability of the wafer level (e.g. cluster of TIDs). In a fourth step or stage, a UPC printing is effected. In this step or stage, tags, inlays, labels and tickets, which may be produced in a standard process, are fed into the ISM or SSM module in-line. The ISM module may first print the UPC codes, such as bar codes, and the EPC logo where required.

As UPC codes are not unique, meaning that e.g. multiple tickets/labels can have the same EPC code, the system can be configured to print a UPC code on the label (e.g. bar code) for multiple labels/tickets in the process, by setting the production database to the number of required/same UPC tickets.

A fifth step or stage provides bulk encoding. After UPC printing, the ISM or SSM module writes to multiple (e.g. two, three, four, five or more) tags, labels or tickets at once (bulk encoding) the pre-configured EPC data available to, or supplied to, the machine or encoding step from the database. As an example, bulk encoding capabilities from chip providers may allow e.g. for 1.750 tickets/labels per minute, enabling fast speeds, in contrast to writing of only one tag at a time. This bulk encoding allows machine speeds of e.g. 60 KUPH, or more or less. Further, the ISM/SSM concept does not require shielding mechanisms for encoding process. Multiple antennas may be driven e.g. by multi-port readers or other multiplexing techniques to be sequenced across the serialization module such as ISM, to assure full coverage of the machine, or machine direction, for the tags such as labels and/or tickets.

In a sixth step or stage, EPC code printing is provided wherein a variable print on tags/labels/tickets may be used. In case manufacturers require each EPC code to be printed, e.g. in form of a hexadecimal code or other, on the ticket in addition to UPC, the system optionally allows for printing each EPC code after the bulk encoding. A RFID reader module may read the pre-encoded EPC data (from the prior bulk encoding step) for each individual ticket/label, and may print the variable EPC data on the tag/label/ticket, using, for example, inkjet, flexo or other methods.

In a seventh step or stage, a verification may be performed. In this step or stage, the serialization module such as the ISM or SSM module, may then verify that the EPC that has been printed in the sixth step or stage is matching the printed EPC code such as a barcode. In one or more embodiments, the sixth step or stage is not used. In such a case, a reader may perform the same function to read the individual EPC code for verification that it is matching the printed UPC code. This verification step or stage may be performed using laser scanning of the printed tags, tickets or labels. Units that do not match, such as non-encoded texts or print failures, may be discarded. Verified units, that is matching units, may be packed for shipment.

In an eighth step or stage, a shipment and secure EPC data lock may be provided. A customer may have the ability to direct shipments to any location around the globe. Just-in-time data (database of EPC-UPC codes) post production is available from the point of tag/inlay/label/ticket manufacturing to the customer. EPC data may be transmitted securely to each site, as required by the customer, or may be transmitted to a central IT network in another embodiment, whichever is preferred.

In a next step or stage, a just-in-time production flow and/or data management may be provided. The serialization module concept of embodiments of the present invention such as ISM/SSM, enables just-in-time production flow management for tags/labels/tickets converting that is linked to the printing and encoding process flow (which otherwise would only be available with entirely separate systems/mechanisms, locality) at very fast speeds while assuring unique serialization. E.g. ISM enables e.g. just-in-time process such as just-in-time production or just-in-time delivery, using e.g. pre-encoded EPC architecture to drive manufacturing of labels and tickets such as tags, including at least one, or more or all, of converting, printing, encoding, testing/verifying. Further, just-in-time data (database of EPC/UPC codes) postproduction is available in one or more embodiments from the point of inlay/label/ticket manufacturing (as opposed to product manufacturing such as jeans manufacturing) being available to consumer goods manufacturer, e.g. the customer. A customer has the ability to direct shipments to any location around the globe. EPC data may be transmitted securely to each site as required by the customer, or to a central customer IT network, or the like, whichever is preferred.

With regard to the above discussed first to ninth step or stage, embodiments of the invention may employ all of these nine steps or stages whereas other embodiments may use only one or some but not all of the above stages or steps, and may obviate arbitrarily one, two, three or more of the above listed stages, as required or appropriate.

Embodiments of the invention may therefore employ only one of the above listed steps or stages, two, three, four, five, six, seven, eight or even all of the above listed steps or stages in any arbitrary combination.

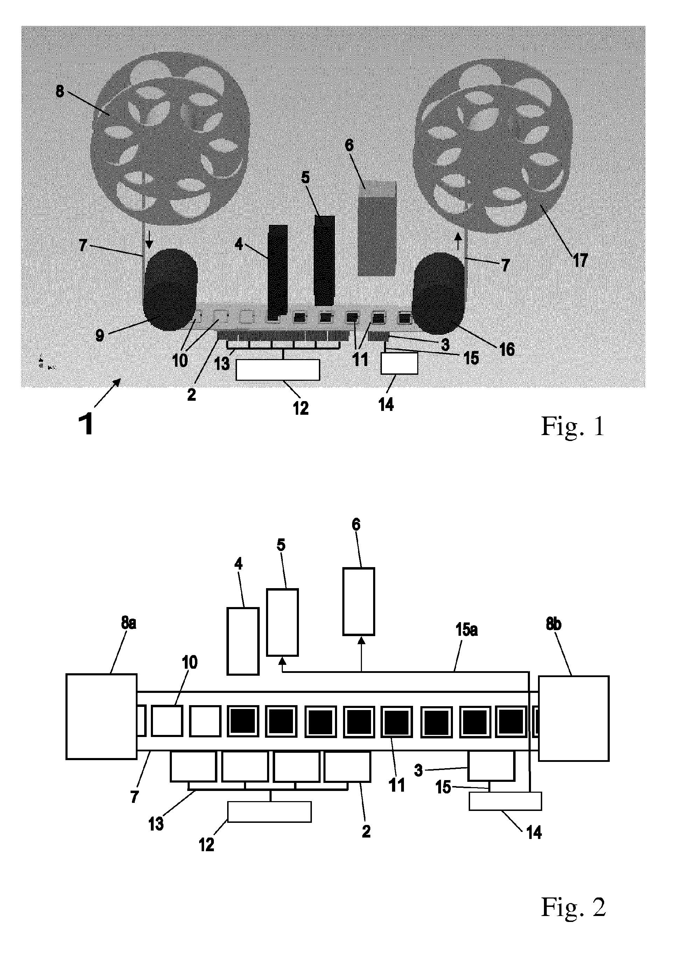

Fig. 1 shows an embodiment of a serialization module 1 which is, in the present example, implemented as a standalone serialization module which may be provided with low costs. In another embodiment, the serialization module 1 may also be implemented as an in-line module.

The module 1 comprises one or more antennas 2, e.g. three or more than three antennas 2 which can be used as encoding antennas for effecting bulk encoding of tags, labels, tickets, chips or the like. In the embodiment of Fig. 1, tags 10 are to be bulk encoded. In the embodiment of Fig. 1, a number of e.g. six encoding antennas such as RFID antennas are arranged along a line essentially parallel to the feeding direction of a tape or web 7 carrying the tags 10.

The web 7 or other transporting material for carrying the tags 10 is supplied from a feeding roll or supply roll 8, and is guided by means of guiding rolls 9, 16 to a take-up wheel or roll 17 on which the finished encoded material such as tags etc. is stored for later use.

The supply roll 8 serves as material input for providing the uncoded tags 10.

In the embodiment of Fig. 1, the serialization module 1 comprises two printing units 4, 5 for printing of a barcode and a product code EPC onto the tags or labels 10. Reference numeral 11 has been assigned to the coded such as printed tags for better distinguishing them against the uncoded, or only partially coded tags 10.

Instead of two printing units 4, 5, in another embodiment, only one printer may be provided for printing at least one of a barcode and EPC onto the tags or labels to be printed. In another embodiment, none of such printing units 4, 5, or more than two printing units 4, 5 are provided, depending on the type of web 7 and tags 10 to be used. In case the tags 10 have already been preprinted with barcodes and/or EPC codes, it is not necessary to provide a respective printing unit 4 and/or 5 for printing of an already present barcode and/or EPC code.

The one or more antennas 2 for bulk encoding are connected, via connecting lines 13 or other connecting devices to a controller 12 which may e.g. be implemented as a processing unit or in any other appropriate form. For bulk encoding, the one or more antennas 2 are preferably arranged and implemented in such manner that each antenna 2 can encode more than one of the tags or labels 10. In another embodiment, the antennas 2 may be arranged in a one-to-one correspondence with the labels to be encoded.

Subsequent to the printing and/or encoding of the tags 10, the encoded tags 11 may be tested for proper coding and correlation between printed barcodes, encoded EPC, UPC, TID, etc. A scanner 6 may be provided for this purpose which may perform at least one of an optical scanning and an electromagnetic scanning. The scanner 6 tests a correlation between a printed or existing barcode, EPC, UPC, TID, etc., on the printed tags, e.g. by optically inspecting the printed tags 11 from the above, as shown in Fig. 1.

Further, in addition to, or instead of, the scanner 6, a reader antenna 3 may be provided for reading encoded tags 11. The reader antenna 3 is connected, via a connecting device such as a connecting wire 15, to a controller such as a processing unit 14 which is configured to evaluate the signals read from the encoded tag 11 by means of the reading antenna 3.

Although the controller 12 and the controller 14 are shown in the embodiment of Fig. 1 in the form of separate devices, in another embodiment, the controllers 12, 14 may be implemented in form of a single controller connected to all antennas 2, 3.

As shown in Fig. 1, the tags 10 are provided on the web 7 along one line with equidistant pitch between the tags 10.

As already mentioned above, in the present specification, the term "tag" is to be understood as encompassing any of tags, labels, tickets, chips or the like.

Further, the printing units 4, 5 are arranged in a mutual distance of e.g. two times of the distance between the centers of adjacent tags 10. Likewise, the distance between the printing unit 5 and the subsequent scanner 6 corresponds to approximately two times of the distance between the centers of adjacent tags 10. In other embodiments, the distances between the printing units 4, 5 and scanner 6 may e.g. correspond to only one center-distance of the tags, or to more than two center distances, or may also be different from each other. Further, the width of the one or more encoding antennas 2 may be similar to the distance between the centers of adjacent tags, or may be smaller or preferably larger than such a distance so as to allow bulk encoding of several tags 10 simultaneously with a reduced number of antennas 2.

The web 7 may be continuously transported, or may preferably be transported on a stepwise basis, with each step corresponding to one (or more than one) pitches, that is distances between the centers of adjacent tags. The antennas 2 are arranged in the embodiment of Fig. 1, along a line which runs in parallel along the linear feeding direction of the web 7 between the guiding rolls 9 and 16, and are furthermore arranged essentially in the same line as antenna 3 on the same side (lower side of Fig. 1) of the web 7. In contrast, the printing units 4, 5 and the scanner 6 are arranged on the opposite side (upper side of Fig. 1) of web 7. All antennas 2, 3, printers 4, 5 and scanner 6 are arranged between the guiding rolls 9, 16, as shown in Fig. 1.

The number of antennas 2 may range from 1 to any number. In the embodiment of Fig. 1, the spacing of the antennas 2 is different from the spacing of the tags 10, 11. Further, in the embodiment of Fig. 1, no tag-to-tag shielding is provided between adjacent tags. This is an advantage of bulk encoding for simultaneously encoding two or more tags 10 at one time.

As mentioned above, instead of two printing units (printers) 4, 5, it is also possible to provide no printer at all, or only one printer which prints either UPC or EPC or another information, or one printer that prints a combination of UPC, EPC, barcodes, or other, in any arbitrary combination. Likewise, as shown in Fig. 1, it is also possible to have two printers 4, 5, where one printer (e.g. printer 4) prints UPC, barcode or another information, and the other printer (e.g. printer 5) prints EPC.

In the embodiment of Fig. 1, the two printers 4, 5 can work in parallel and therefore contribute to speed up the overall process. As an example, when printer 4 prints barcodes, the other printer 5 may simultaneously print a number code such as EPC onto tags 10 which had already been printed, by means of printer 4, with other information.

At least one of, preferably both, of the printers 4, 5 printing e.g. the EPC onto the tags 10 after encoding thereof by means of the one or more antennas 2 is matched or synchronized with the encoding so as to ensure that a certain tag 10 onto which a code has been encoded, for instance bulk encoded, by means of the antenna 2, is read and/or printed with the correct EPC code suitable for this encoded tag. This synchronization or matching may be achieved by arranging the one or more printers 4, 5 at certain positions and ensure that the web 7 is transported with such a speed or with such a number of steps that the printer 4 and/or 5 is acting on the proper tag 10 encoded by the one or more antennas 2. Further, the scanner 6 is also matched, i.e. synchronized, to reading a certain tag 10, 11 in case the scanner 6 is controlled to verify the EPC code of the respective tag 11. Fig. 1 shows an embodiment with an appropriate arrangement of the printers 4, 5, scanner 6 and antennas 2, 3. The antenna 3 is likewise arranged and controlled to read a tag 11 onto which proper codes have been encoded or printed by means of the antennas 2 and the printers 4, 5.

In the embodiment of Fig. 1, block 12 connected to the one or more antennas 2 by means of lines 13 may alternatively or additionally be implemented as an RFID encoder block connected to the plurality of antennas 2 for bulk encoding. In this embodiment, the RFID encoder block 12 provides signals to the antennas 2 for generating RF (radio frequency) fields for encoding the tags 10 with the desired information, preferably in the form of bulk encoding.

Likewise, block 14 connected to the reader antenna 3 by means of connecting line 15 may be implemented in form of an RFID reader block reading the information encoded into the respective tags 11.

In another embodiment, the encoder block 12 and the reader block 14 may be implemented in form of a combined encoder and reader.

In an embodiment as shown in Fig. 1, block 12 may be implemented as a controller block in addition to, or instead of an RFID encoder block. Further, block 12 may additionally or alternatively be implemented in form of a central database block connected to the encoder/reader. Still further, block 14 may also be implemented in form of, or may additionally include, a central database for comparing information read from a tag 11 with the expected information so as to generate acceptance or error information depending on the outcome of the comparison check.

In the embodiment of Fig. 1, the tags 10, 11 are arranged in form of a linear array along the lengthwise direction of web 7. However, in other embodiments, the arrangement of the tags 10, 11 may also be different. As an example, more than one row of tags on the web (tape) 7 or sheets of tags, or even individual tags may be arranged in form of a grid.

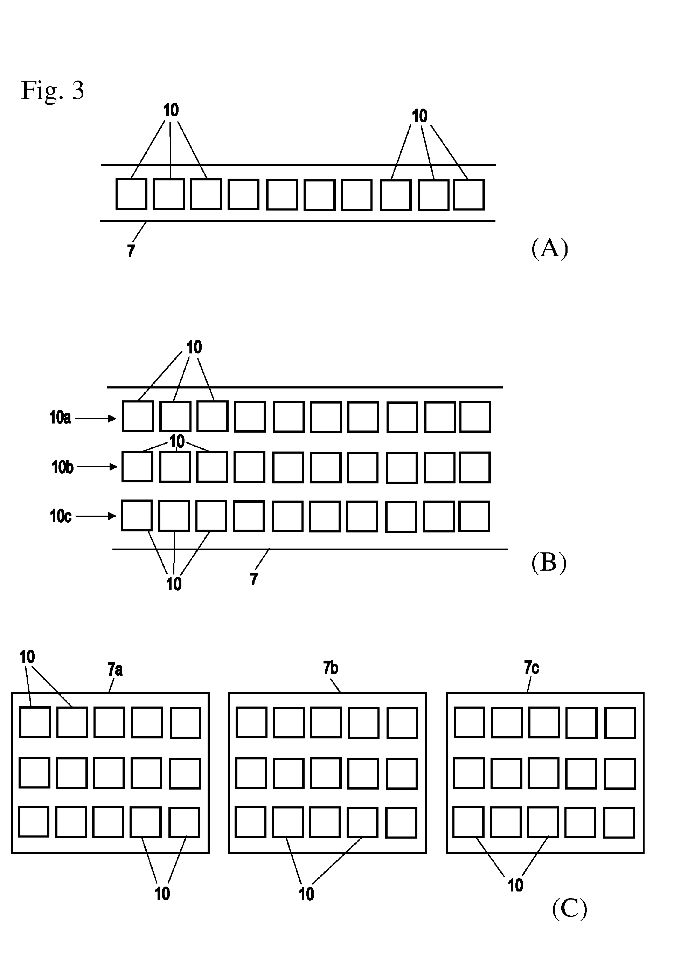

Figs. 3(A), (B), (C) illustrates three different examples of arrangements of tags 10 onto a web (tape) 7.

The arrangement of Fig. 3(A) essentially corresponds to the arrangement shown in Fig. 1.

In the implementation of Fig. 3(B), more than one row of tags 10 is provided. As an example, two, three, four or more rows of tags 10 may be provided. In the example of Fig. 3(B), three parallel rows 10a, 10b, 10c are arranged parallel to each other and parallel to the longitudinal extension of web 7. This arrangement allows an even more accelerated bulk encoding, by applying the same bulk encoding systems to the antennas 2 for encoding the respective tags in parallel. Here again, no shielding between the tags or the rows of tags is necessary.

In the example of Fig. 3(C), the web 7 is not provided in form of a continuous tape but consists of several separate sheets 7a, 7b, 7c of tape which are transported in a consecutive manner so as to follow each other. Each of the sheets 7a, 7b, 7c may comprise one, two, three or more rows of tags 10. In the embodiment of Fig. 3(C), three parallel rows of tags 10 are provided, similar to the embodiment of Fig. 3(B), with each of the tapes comprising a certain number of tags 10 such as e.g. 15 or more tags 10 which may e.g. be arranged in the form of three rows with five tags 10 in each row, as e.g. illustrated in Fig. 3(C).

The above arrangements of the tags on the tape are just example embodiments and may differ from each other regarding the number of rows, tags, etc.

Fig. 2 illustrates an embodiment similar to the embodiment of Fig. 1.

In the embodiment of Fig. 2, the web 7 may have the form of a planar sheet supplied from a material input 8a and collected in a sheet collector 8b. The material input 8a may be constructed in form of a supply roll 8 and guide roll 9 shown in Fig. 1, or may also be implemented e.g. in the form of a sheet provider stocking a plurality of sheets in parallel form and individually feeding sheets to the encoding and printing as well as reading sections, formed by antennas 2, 3, printers 4, 5 and scanner 6. Similar to the above embodiment of Fig. 1, the same or additional alternative implementations of the respective components may be implemented such as providing only one or none or more than two printers 4, 5 and scanner 6.

Likewise, with regard to taking up of the printed and coded sheets or web or tape 7, stage 8b may be implemented in the form as shown in Fig. 1 by means of take-up roll 17 and guide roll 16, or may be implemented in any other appropriate form such as a sheet stacker or the like.

In the embodiment of Fig. 2, the controller 15 is connected to the scanner 6 and one or more of the printers 4, 5 by means of a connecting line or bus 15a so as to transmit controlling signals and/or scanned and read signals between the controller 14 and the printers and scanner. Therefore, correct functioning and proper encoding and printing results of the coded and printed tags 11 can be ensured by the controller 14.

Apart from the above, the explanations regarding the embodiment of Fig. 1 likewise apply to the embodiment of Fig. 2.

In the embodiments of Figs. 1, 2, a standalone serialization module has been shown in form of embodiments. In other embodiments, the serialization module may be implemented as an in line serialization module or integrated serialization module ISM. In such an embodiment, one or more tags 10 may be provided on an article and may be carried along a bulk encoding antenna stage such as the antennas 2, as well as along a printing stage such as one or more of the printers 4, 5. The bulk encoding antenna may apply a proper RF field to the tag already carried on the article for properly encoding the tag. Then, or simultaneously or beforehand, a proper code may be impressed such as printed onto the tag 11. In such a case, each tag, or a number of tags already applied on the articles or within a carrier or the like may be encoded, and/or imprinted in form of an in-line production. In such an embodiment, the web 7, and rolls 8, 9, 16, 17 are not necessary. Likewise, the scanner 6 and reader antenna 3 with processor 15 do not necessarily have to be provided.

Although the invention has been described above with regard to particular embodiments, the scope of protection is not limited to the embodiments described above and shown in the drawings but also encompasses any alternative or different limitation as evident for the skilled person.

## Claims

1. Method for providing one or more tags such as e.g. inlays, labels or tickets,
wherein a database such as a centralized code database or an EPC, electronic product code, database, is provided, comprising:
encoding such as a bulk encoding of the one or more tags,
printing a code such as a barcode onto the tag.

2. The method of claim 1, comprising at least one or more, in any arbitrary combination, or all of the following steps in any arbitrary sequence:
- Receive at least one code such as a UPC, universal product code from a source such as a manufacturer,
- Receive tags such as inlays, labels, tickets or wafers such as RFID, radio frequency identification, wafers with unique tag identity,
- Generate a code such as an EPC code,
- Provide a database comprising codes such as EPC codes and corresponding UPC codes,
- Feeding one or more tags such as inlays, labels and tickets, into a serialization module, e.g. in-line,
- Printing the code such as an UPC code or barcode optionally together with an EPC logo,
- Printing the code such as UPC code onto the tag, such as a barcode, for multiple tags, for example by setting a production database to a number of required tags having the same code such as UPC code.

3. The method of claim 1 or 2, comprising at least one or more, in any arbitrary combination, or all of the following steps in any arbitrary sequence:
- After or before or during the code printing such as UPC printing, a serialization module writes to multiple tags such as labels/tickets simultaneously so as to carry out a bulk encoding, the preconfigured data such as EPC data supplied from the database,
- Optionally driving multiple antennas by multi-port readers or other multiplexing techniques to be sequences across the serialization module,
- Printing the code such as an EPC code after bulk encoding.

4. The method of claim 1, 2, or 3, comprising at least one or more, in any arbitrary combination, or all of the following steps in any arbitrary sequence:
- Reading the pre-encoded data such as EPC data from the prior bulk encoding step, for each individual tag, and printing variable data such as EPC data onto the tag,
- Optionally verifying that the EPC code or other code printed or provided is matching the printed code such as UPC code or barcode, optionally by scanning such as laser scanning;
- Optionally discarding non-matching tags and the products carrying such tags,
- Optionally transmitting EPC data securely to a site as required by a customer, or to a central customer network.

5. Serialization module, comprising, or being configured for access to, a database such as a centralized code database or an EPC, electronic product code, database,
comprising an encoding means for encoding such as a bulk encoding of one or more item such as tags, and
printing means for printing a code such as a barcode onto the tag.

6. The serialization module of claim 5, comprising at least one, more, in any arbitrary combination, or all of the following features:
- Means for receiving codes such as UPC, universal product code from a source such as a manufacturer,
- Means for receiving tags such as inlays, labels, tickets or wafers such as RFID, radio frequency identification, wafers with unique identity such as tag identity,
- Means for generating a code such as an EPC code,
- Means for providing, or accessing, a database comprising codes such as EPC codes and corresponding UPC codes,
- Means for feeding one or more tags such as inlays, labels and tickets, into a serialization module, e.g. in-line,
- Means for printing a code such as an UPC code or barcode, and optionally also an EPC logo,
- Means for printing the code such as UPC code or a barcode, onto one or multiple tags, for example by setting the production database to a number of required tags having the same code such as UPC code.

7. The serialization module of claim 5 or 6, comprising at least one, more, in any arbitrary combination, or all of the following features:
- Means for writing, before, during or after code printing such as UPC printing, to multiple tags such as labels/tickets simultaneously so as to carry out a bulk encoding, wherein preconfigured data such as EPC data can be supplied from the database,
- Means for optionally driving multiple antennas by multi-port readers or other multiplexing techniques to be sequences across the serialization module,
- Means for printing a code such as an EPC code after bulk encoding.

8. The serialization module of claim 5, 6, or 7, comprising at least one, more, in any arbitrary combination, or all of the following features:
- Means for optionally reading the pre-encoded data such as EPC data from the prior bulk encoding step, for each individual tag, and printing variable data such as EPC data onto the tag,
- Means for optionally verifying that the EPC code or other code printed or provided is matching the printed code such as UPC code or barcode, optionally by scanning such as laser scanning;
- Means for optionally discarding non-matching tags and the products carrying such tags,
- Means for optionally transmitting EPC data securely to a site as required by a customer, or to a central customer network.

9. System, comprising at least one serialization module as defined in any one of claims 5 to 8.
